# EUROPEAN PATENT APPLICATION

(11) **EP 2 034 320 A2**
(43) Date of publication of application: **11.03.2009**
(21) Application number: 08163824.9
(22) Date of filing: 05.09.2008
(51) Int. Cl.: G01N 35/10, G01N 35/00, G01N 35/02, G01N 33/543

(54) **Separation Apparatus**

(30) Priority: 07.09.2007 GB 0717452
(71) Applicant: Mole Genetics AS, 1326 Lysaker (NO)
(72) Inventor: Deggerdal, Arne, Lysaker (NO)
(74) Representative: Daniels, Jeffrey Nicholas

(57) **Abstract**

Provided is an apparatus for automated separation of a target component from a sample using magnetic particles, which apparatus comprises a reagent delivery device and a vial holder for holding one or more vials in position, in which the reagent delivery device is alignable with the one or more vials for reagent delivery thereto;
wherein means are provided to vary the angle of incidence of reagent delivery relative to an internal wall of the one or more vials.

## Description

The present invention relates to apparatus for automated separation of a target compound from a sample using magnetic particles, a process for such separation and a vial assembly for use in such apparatus and process.

Magnetic particles are a useful alternative to separation media traditionally employed in isolating target compounds from chemical or biological samples. This is particularly so in molecular biology where the target compounds may be nucleic acids such as DNA and RNA. The magnetic particles may be organic polymer or silicon based and generally incorporate paramagnetic or ferromagnetic species. Typically, the target compound binds to the magnetic particles to form a suspension of the particles in liquid and this suspension is subjected to a magnetic field so as to separate physically the magnetic particles binding the target compound from the remaining components in a liquid phase. The unwanted liquid phase or supernatant may be removed by decanting or aspiration. The magnetic particles may be subjected to washing and/or resuspension steps ultimately followed by an elution step to elute the target compound from the magnetic particles.

This type of magnetic separation may be automated. Apparatus is commercially available which includes an automated pipette head assembly movable within the apparatus so that it may be aligned with test tubes or vials for reagent liquid handling. The step of magnetic separation may be performed using a magnetic rod which is also movable within the apparatus. Apparatus of this type has been made to very high standards of engineering using high quality durable machinery which may be precision manufactured to ensure that operation of the apparatus is reliable. Usually, apparatus of this type includes a dedicated microcomputer to enable programmable control of the processes which the apparatus must perform. Such apparatus is generally expensive to purchase and may require specialist service contracts for maintenance.

A problem arises when such automated apparatus is used in the magnetic separation steps described herein. At the stage in magnetic separation where a vial in the apparatus contains a suspension of the magnetic particles, the magnetic rod is positioned so as to attract the particles to a position on the internal wall of the vial after which aspiration of the supernatant liquid is performed. This step causes the magnetic particles frequently to be hard packed against the internal wall of the vial which may make them difficult to resuspend. The step of resuspension is traditionally performed by dispensing resuspension buffer along a vertical axis of the vial. Extremely accurate positioning of the reagent delivery is required so that the buffer is dispensed as close as possible to the wall where the particles are situated. This can result in poor resuspension of the particles and may result in low recovery yields of often precious target compound.

According to the present invention there is provided apparatus for automated separation of a target component from a sample using magnetic particles, which apparatus comprises a reagent delivery device and a vial holder for holding one or more vials in position, in which the reagent delivery device is alignable with the one or more vials for reagent delivery thereto;
wherein means are provided to vary the angle of incidence of reagent delivery relative to an internal wall of the one or more vials. Preferably, the means to vary the angle of incidence of reagent delivery tilt the one or more vials relative to vertical.

In this way, the invention provides a solution to the problem of resuspending magnetic particles in an automated separation apparatus which can be provided simply and inexpensively and without adding any major new mechanical parts. By increasing the angle of incidence of reagent delivery relative to the internal wall when resuspension is required, it makes it much easier to hit the magnetic particles and flush them from the internal wall to the bottom of the vial.

Advantageously, the vial holder is tilted with the one or more vials held in position. Preferably, the vial holder is pivotably mounted to permit the one or more vials to be tilted. Whilst this may be achieved by providing a vial holder of specialist design, it is preferred that the vial holder comprises a platform with a profile adapted to hold the one or more vials in position. Such a platform may comprise a removable base plate and may be readily available as a standard laboratory item typically made inexpensively from plastics material. The profile of the vial holder may comprise a series of openings for holding the one or more vials in position. The seating of the vials is preferably snug so as to ensure that the vials are secure during operation of the apparatus.

Making the base plate removable avoids the need for providing a specially-adapted base plate which may be an expensive option. It is preferred that the removable base plate is situated on a surface of the apparatus adjacent a protrusion above the surface so as to position the base plate and one or more vials relative to the reagent delivery device. This provides a relatively inexpensive way of ensuring that the base plate is in the correct position during operation. The protrusion may be one of a group of protrusions situated to ensure accurate positioning of the base plate. The surface maybe formed from a tray, typically of stainless steel, situated on the floor of the apparatus. The protrusion may be formed unitary with the surface or may be provided as cones, nodules or other shapes attached to the surface, for example by a screw thread. A protrusion may act as a pivot point when the base plate is tilted and may be in the form of a ridge or one or more cones aligned for this purpose.

The reagent delivery device typically comprises a pipette. For performing multiple separations in a series of vials it is desirable to use a pipette head assembly which communicates with a series of pipettes.

It is preferred that the vial forms part of a vial assembly comprising one or more reagent containers attached to at least one of the one or more vials. The vial assembly conveniently may be provided as a strip of a plurality of the reagent tubes with a vial at an end thereof. One or both of the vial and the reagent containers may fit into the vial holder. Thus, in one arrangement the reagent containers comprise a base portion which fits snugly into the base plate and a tube portion which provides a container for reagents. The tube portion does not have to have a circular cross section and may have a square cross section or another cross section. The vial for reagent delivery in which magnetic separation typically takes place does not have to have a base portion if the containers of the vial assembly are secured in the vial holder themselves as long as the vial is attached securely to a reagent container adjacent thereto. This is apparent in the Figures, as described in further detail below. The vial may advantageously have a taper to accommodate at the bottom of the vial a small volume of sample.

Where the vial holder is adapted to hold a vial assembly comprising one or more reagent containers attached to at least one of the one or more vials, the vial assembly may have a contact point for engagement with lifting means provided in the apparatus so as to tilt the vial assembly. Alternatively, the vial holder itself has such a contact point. In either arrangement, the contact point is typically provided by a projection from the vial assembly or vial holder. This projection may be in the form of a tab, for example projecting laterally from the vial assembly or vial holder. Where the projection is provided in the vial assembly, this is preferably situated at the end of the strip opposite to the vial. This enables the lifting of the vial assembly to take place away from the vial where magnetic separation has taken place.

The lifting means of the apparatus preferably comprises a rod alignable with the contact point of the vial assembly or vial holder. The rod is typically movable in a controlled way in both horizontal and vertical directions to enable it to be positioned correctly within the apparatus. In a particularly preferred aspect of the invention, the rod is a magnetic rod alignable with the one or more vials to attract magnetic particles therein. The magnetic rod therefore performs a dual role in both acting as the means to provide a magnetic field for the step of magnetic separation and to provide a lifting means. Both of these functions typically require a controlled horizontal and vertical movement. By using the magnetic rod in this manner, an additional lifting mechanism is not required.

The magnetic rod itself may be a rod which has been magnetised or may be a rod which has one or more magnets attached thereto.

In a further aspect of the invention there is provided a process for automated separation of a target compound from a sample in apparatus as described herein, which comprises
subjecting a suspension of magnetic particles to which the test compound is bound in the one or more vials to a magnetic field to cause the magnetic particles to migrate to a position on the internal wall of each vial;
removing supernatant liquid from the one or more vials; and
delivering reagent to the particles at an angle of incidence sufficient to flush the particles from the internal wall.

In a further aspect of the invention there is provided a vial assembly, as described herein. In a preferred embodiment, the vial assembly has one or more of the reagent containers pre-filled with reagent. Advantageously, the vial assembly containing pre-filled reagents may be provided in which the mouths of the tubes and/or vials are sealed to contain the reagent and to prevent ingress of contamination.

The invention will now be described in further detail, by way of example only, with reference to the accompanying drawings, in which:
FIGURE 1 shows a perspective view of the apparatus according to the present invention;
FIGURE 2a shows the mid section of the apparatus before magnetic bead collection;
FIGURE 2b shows a close up side view of a reagent strip situated in the base plate;
FIGURE 3a shows the mid section of the apparatus when the magnetic rod is aligned to attract the magnetic beads;
FIGURE 3b shows a close up side view of a reagent strip situated on the base plate; ,
FIGURE 3c shows a perspective view of the reagent strips in position on the base plate with magnetic rod in place for magnetic separation;
FIGURE 4a shows the mid section of the apparatus when aspirating supernatant liquid;
FIGURE 4b shows a close up side view of one reagent strip situated on the base plate during aspiration;
FIGURE 5 a shows the mid section of the apparatus during tilting;
FIGURE 5b shows a close up side view of one reagent strip situated in the base plate during tilting;
FIGURE 5c shows a perspective view of a base plate and reagent strips with the magnetic rod in place for lifting;
FIGURE 6a shows a mid section of the apparatus while the beads are flushed off the vial wall;
FIGURE 6b shows a close up of one reagent strip situated in the base plate while the beads are flushed off.

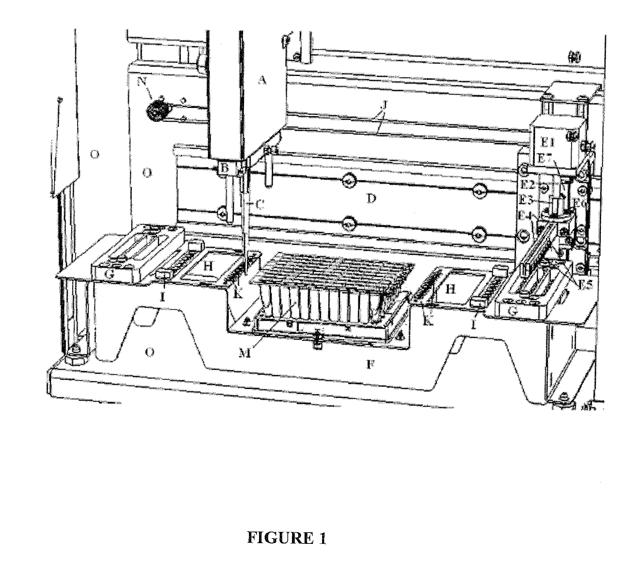

Figure 1 shows the principal features of the apparatus according to a specific embodiment of the invention. Instrument frame O generally forms part of a cabinet for laboratory bench top use. Work surface tray F is made of stainless steel and provides a surface for mounting or positioning various other elements of the apparatus. Pipette storage plate G enables storage of pipette tips. A holder for elution tubes I is provided adjacent the pipette tip storage plate. A waste box position H enables waste to be disposably located therein. Positions for sample tubes K are provided adjacent the waste box position. A series of reagent strips M are seated on base plate L. The base plate is positioned on the work surface tray by means of protruding cones. Further positions for sample tubes K, holder for elution tubes I and pipette tip storage plate G are provided.

Pipette head assembly A is movable horizontally and vertically. Horizontal movement is achieved by attachment of the assembly to rails along the back wall of the apparatus frame and the assembly is driven by a drive belt powered by a motor (not shown). Vertical movement is achieved by mounting the head on a threaded axle which is driven by a further motor. A pipette tip ejector is provided on the pipette head and the head is shown in the Figure with a single dispoable pipette tip. The pipette head may attach a plurality of disposable pipette tips.

The magnetic rod E4 comprises a standard aluminium rod to which are secured magnets E5. The magnets are seated in holes in the aluminium rod and are attached to a flat steel rod (not shown) which sits in a groove in the aluminium rod.Module carriage E6 provides a mounting for magnetic rod E4 and motor E1. At the end of the magnetic rod proximal to the module carriage E6 is provided a small carriage part slidably mounted on vertical rail E7. Motor E1 drives threaded axle E2, which passes through nut E3 fixed to the small carriage part of the magnetic rod to provide vertical movement on the vertical rail E7. Module carriage E6 is mounted for horizontal movement along the horizontal rail to enable the entire assembly including magnetic rod E4 and motor E1 to move horizontally. Drive belt J turns over a free pulley N on one side and over a pulley fixed to the axle of the motor on the other side (not shown) to provide horizontal movement along the rail.

In operation, the right- and left-most vials of the reagent strips will contain paramagnetic particles suspended in an aqueous solution. To attract the particles to the wall of the vial, the magnetic rod E4 is moved in horizontal and vertical directions using the system described above. The magnetic rod therefore has all the mobility needed for tilting the reagent strips in the base plate to which they are attached. This process is described in further detail as follows.

### Step 1 - before magnetic capture

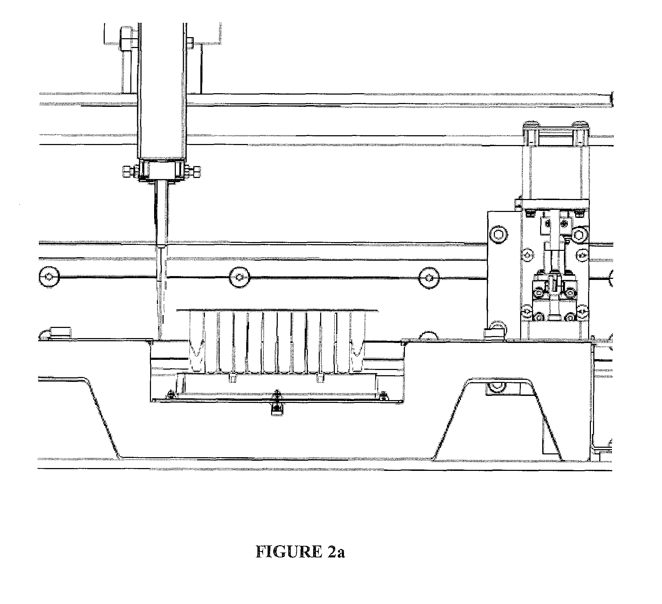

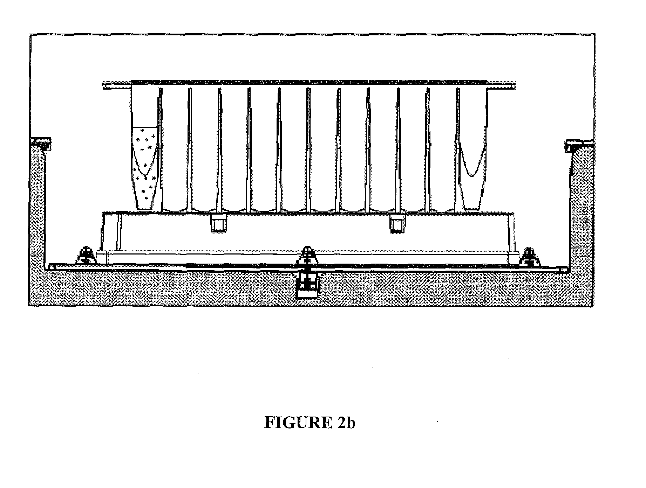

Figure 2 shows the mid section of the apparatus before magnetic capture. Cones at each end of the base plate keep the plate in position when it is flat on the work surface tray. The cones also provide pivot points when the plate is tilted. This is shown in further detail in Figure 2b where the work surface tray is shown shaded in grey. The magnetic beads in the left-most vial are suspended in liquid.

### Step 2 - magnetic capture

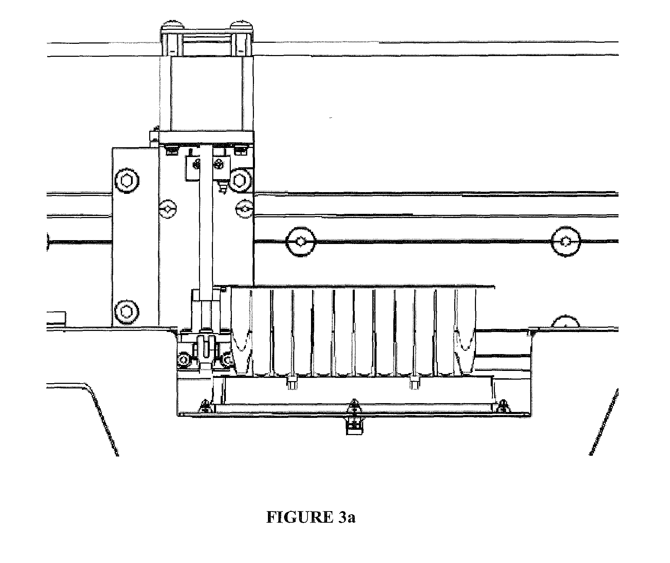

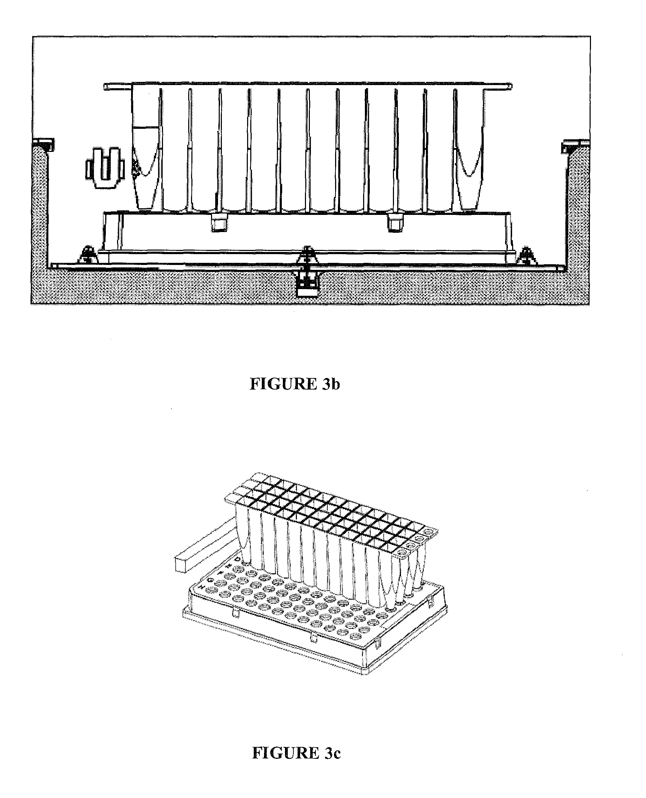

Figure 3a shows the mid section of the apparatus when the beads are collected. At this point in the cycle, the magnetic rod has been moved into a position adjacent the left-most vial so as to attract the magnetic beads to the side of the vial. Figure 3b shows this in further detail. The magnetic beads in the left-most well are collected on the side wall of the vial and the liquid in the rest of the vial is free from beads. The magnetic rod and the magnets to the left of the strips are only represented in cross section. Figure 3c shows a simplified perspective view of a rod in position adjacent the vial for attracting the magnetic beads to the side of the vial.

### Step 3 - aspiration of bead-free liquid

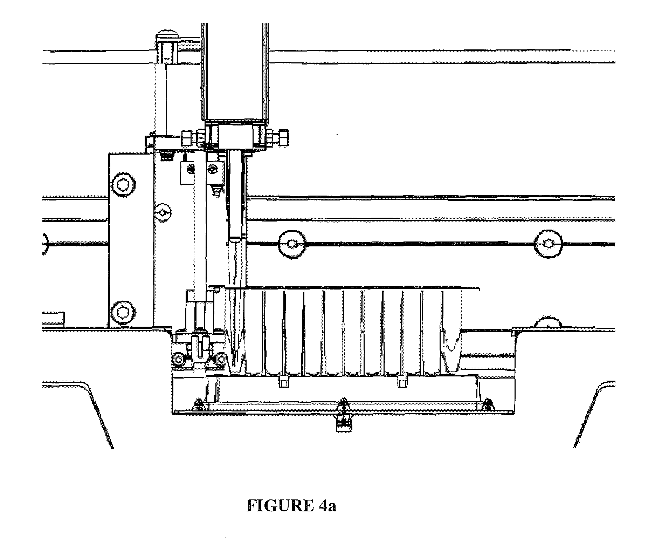

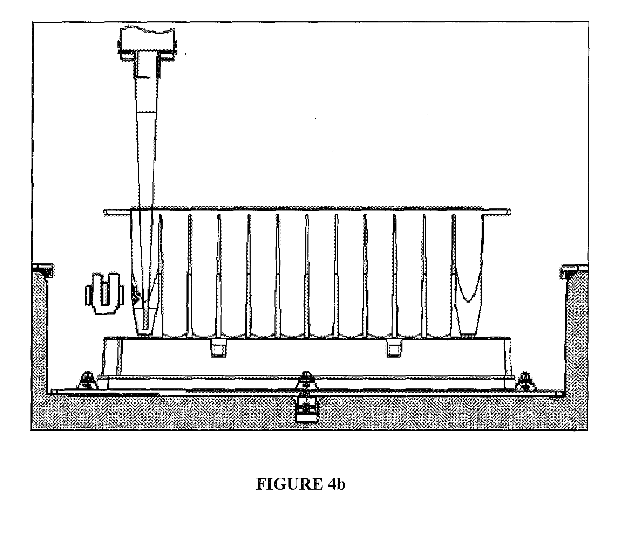

Referring to Figure 4a, there is shown a mid section of the apparatus when bead-free liquid is aspirated. The pipette head assembly is aligned with the vial by a combination of vertical and horizontal movement as described above. A pipette tip is placed in the vial extending to the bottom of the vial so as to aspirate the liquid therefrom. This is described in further detail in Figure 4b which shows a close up of one reagent strip situated in the base plate on the top of the work surface tray. In this Figure most of the liquid has been aspirated into the pipette tip, leaving the magnetic beads on the wall of the vial still attracted to the magnet. In conventional apparatus, a similar vertical orientation of pipette tip would be used to try to flush the beads off the vial wall. The present invention recognises that this shallow angle of incidence makes it difficult to flush the beads effectively.

### Step 4 - discarding the aspirate and aspirating fresh buffer

These are standard liquid handling steps in which the pipette head assembly is moved so as to remove the pipette tip from the vial, discard the aspirated liquid and take up fresh buffer for a further step of aspiration.

### Step 5 - tilting the reagent strip

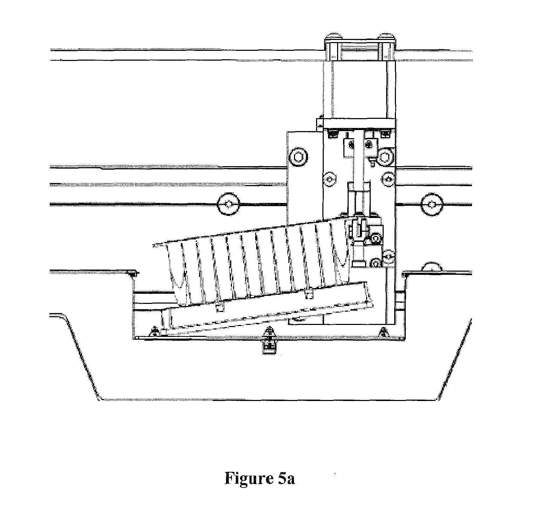

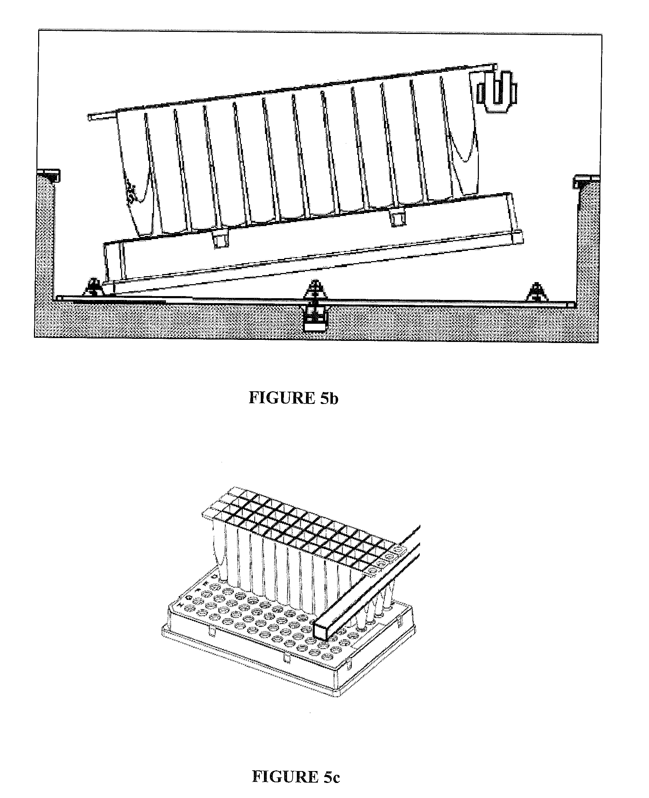

Figure 5a shows the mid section of the apparatus during tilting. The magnetic rod has now been moved to the right-most side of the reagent strip and is used to lift the strip by means of the tab distal to the vial holding the magnetic particles. This is shown in further detail in Figure 5b. Although the magnetic rod is no longer adjacent the vial containing the magnetic beads, they remain adhered to the side of the vial wall. It is apparent from this Figure that the magnetic rod is used to lift the reagent strip and that the strip has a pivot point where the base plate abuts the cone at the end of the base plate. Figure 5c shows a simplified perspective view of a rod in position below the tabs of the reagent strips for lifting the strips and base plate.

### Step 6 - flushing the beads off the wall of the vial

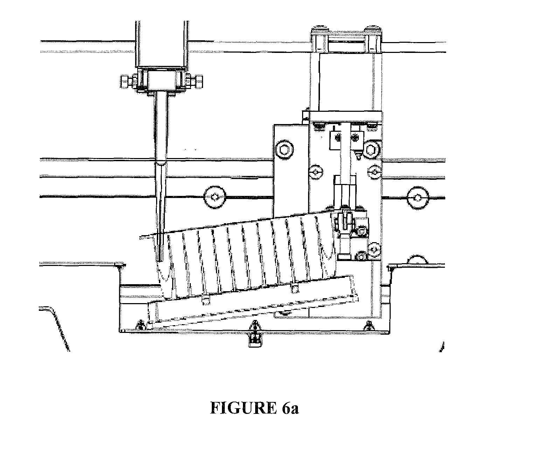

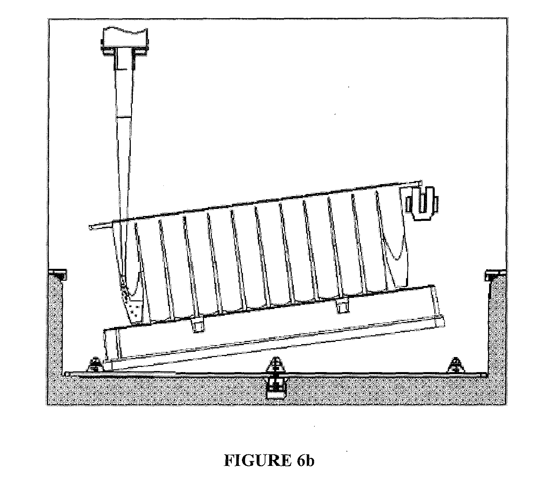

Figure 6 shows the mid section of the apparatus while the beads are flushed off the well wall. The pipette tip is in position whilst the magnetic rod tilts the reagent strips and base plate. Figure 6b shows this in further detail. The increased angle of incidence between the pipette tip and the wall of the vial allows a jet of buffer from the pipette tip to hit the collected magnetic beads with enhanced accuracy and enhanced force.

## Claims

1. Apparatus for automated separation of a target component from a sample using magnetic particles, which apparatus comprises a reagent delivery device and a vial holder for holding one or more vials in position, in which the reagent delivery device is alignable with the one or more vials for reagent delivery thereto;
wherein means are provided to vary the angle of incidence of reagent delivery relative to an internal wall of the one or more vials.

2. Apparatus according to claim 1, wherein the means to vary the angle of incidence of reagent delivery tilt the one or more vials relative to vertical.

3. Apparatus according to claim 2, wherein the vial holder is pivotably mounted to permit the one or more vials to be tilted.

4. Apparatus according to claim 3, wherein the vial holder comprises a platform with a profile adapted to hold the one or more vials in position, wherein the platform preferably comprises a removable base plate.

5. Apparatus according to claim 4, wherein the removable base plate is situated on a surface of the apparatus adjacent a protrusion above the surface for positioning the base plate and one or more vials relative to the reagent delivery device.

6. Apparatus according to claim 5, wherein the protrusion acts as a pivot point when the base plate is tilted.

7. Apparatus according to any preceding claim, wherein the reagent delivery device comprises a pipette.

8. Apparatus according to any preceding claim wherein the vial holder is adapted to hold a vial assembly comprising one or more reagent containers attached to at least one of the one or more vials.

9. Apparatus according to claim 8, which further comprises lifting means for tilting the vial assembly, wherein the vial assembly or vial holder has a contact point for engagement with the lifting means so as to tilt the vial assembly, wherein the contact point is preferably provided by a projection from the vial assembly or vial holder.

10. Apparatus according to claim 9, wherein the lifting means comprises a rod alignable with the contact point.

11. Apparatus according to claim 10, wherein the rod is a magnetic rod alignable with the one or more vials to attract magnetic particles therein.

12. Process for automated separation of a target compound from a sample in apparatus according to any preceding claim, which comprises:
subjecting a suspension of magnetic particles to which the test compound is bound in the one or more vials to a magnetic field to cause the magnetic particles to migrate to a position on the internal wall of each vial;
removing supernatant liquid from the one or more vials; and
delivering reagent to the particles at an angle of incidence sufficient to flush the particles from the internal wall.

13. A vial assembly comprising one or more reagent containers attached to a vial, for use in an apparatus according to any one of claims 9 to 11, which vial assembly further comprises a projection for engagement with the lifting means provided in the apparatus.

14. A vial assembly according to claim 13, which comprises a strip of a plurality of the reagent containers with the vial at an end thereof, wherein the projection is preferably situated at an end of the strip opposite to the vial.

15. A vial assembly according to any one of claims 13 to 14, in which one or more of the reagent containers are pre-filled with reagent.
